# EUROPEAN PATENT APPLICATION

(11) **EP 4 818 486 A1**
(43) Date of publication of application: **07.10.2026**
(21) Application number: 25167821.5
(22) Date of filing: 01.04.2025
(51) Int. Cl.: F02B 77/08, G01B 5/00, G01B 21/22, G01M 15/04

(54) **GAP POSITION MEASURING DEVICE**

(71) Applicant: WinGD Ltd., 8400 Winterthur (CH)
(72) Inventor: Häussler, Axel, 8416 Flaach (CH); Brutsche, Martin, 8008 Zürich (CH)
(74) Representative: Hepp Wenger Ryffel AG

(57) **Abstract**

A gap position measuring device for an internal combustion engine comprises at least one cylinder with a liner wall, and a reciprocating piston having at least one first piston ring with a piston ring gap. The gap position measuring device comprises a first set of sensors with three temperature sensors, adapted to be arranged on or in the liner wall circumferentially spaced apart in a first axial plane. Further, the gap position measuring device comprises a signal analysing unit configured to receive temperature data from the first set of sensors and further adapted to determine an angular position of the piston ring gap with respect to the cylinder based on the received temperature data.

## Description

The invention relates to gap position measuring device for a piston ring of a reciprocating internal combustion engine, a reciprocating internal combustion engine with such a gap position measuring device, a method for measuring the gap position of a piston ring of an internal combustion engine, and a computer program.

The present invention preferably relates to a reciprocating internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally scavenged two-stroke engine.

The term internal combustion engine also refers to large engines which can be operated not only in diesel cycle, which is characterized by the self-ignition of the fuel, but also in Otto cycle, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e.g. oil made from algae or seaweed), ammonia, hydrogen, synthetic fuels from CO2 (e.g. made by Power-To-Gas or Power-To-Liquid).

Large ships, in particular vessels for transport of goods, usually are powered by internal combustion engines, in particular diesel and/or gas engines, mostly two-stroke, cross head engines.

The pistons of reciprocating piston internal combustion engines, in particular reciprocating piston internal combustion engines of the dual-fuel or Otto-cycle type, are provided with piston rings forming a piston ring package which are seated in grooves in the piston and serve to seal the combustion chamber off from the outside.

Piston rings may have a ring body with ends having a gap in between or a ring body with two overlapping ends forming a piston ring lock. However, in the region of the piston ring lock, the ring is not perfectly closed and pressure in the cylinder might press hot gas through the piston ring lock. Thus, also the piston ring lock is denoted as a piston ring gap, even if there is no actual gap between the ends of the ring body.

The position of the piston ring gaps, the rotational movement of piston rings and hence the position of the piston ring gap over time are important parameter in engine operation and durability.

The gap position of the top compression ring has been shown to affect hydrocarbon exhaust emissions, and alignment of ring gaps is thought to cause an increase in oil consumption. The absence of piston-ring rotational movement in diesel engines can cause localized wear and carbon deposits, while excessive rotational movement can contribute to high wear on the ring sides.

US6155109 discloses a system for measuring a gap rotation comprising a plurality of induction detectors extending through a wall of the cylinder and circumferentially spaced apart in an axial plane crossed by each ring during the piston reciprocation. The end gap position is associated with a detector having a significant variation in sensed induction currents.

KR20010066041 discloses a gap position measuring device for a piston ring including a plurality of temperature sensors mounted at a plurality of positions in the shape of ring in a cylinder block for surrounding a piston coupled with a piston ring to sense environmental temperatures for detecting a position of a gap, a signal analyzer for analyzing temperature values sensed by the respective temperature sensors and received in real time, and a computer for detecting a position of the gap of the piston ring according to maximum and minimum temperature values sensed by one of the temperature sensors from the information input from the signal analyzer. The gap position measuring device needs a plurality of temperature sensors for precisely determining the gap position.

The invention is based on the task of providing a gap position measuring device, an internal combustion engine with such a gap position measuring device, a method for measuring the gap position and a computer program, which avoid the disadvantages of the known, which in particular provide for a safe, reliable and effective measurement of the piston ring gap.

The object is achieved by the characteristics of the independent claims.

A gap position measuring device for an internal combustion engine comprising at least one cylinder with a liner wall, a reciprocating piston having at least one piston ring, comprises at least a first set of sensors with at least one, preferably less than five temperature sensors, preferably two, three or four temperature sensors, more preferably three temperature sensors.

The cylinder preferably has an inner diameter of at least 200 mm.

The temperature sensors are arranged in the liner wall and circumferentially spaced apart. Preferably, the sensors of the first set of sensors are all arranged in a first axial plane.

The gap positioning device comprises a signal analysing unit which is configured for receiving temperature data of the temperature sensors.

The signal analysing unit may be configured for receiving temperature data of only the first set of sensors and/or of only one to four sensors, preferably arranged in one axial plane.

Each of the temperature sensors is connected to the signal analysing unit, either by a connection line or wireless.

The signal analysing unit is configured to determine an angular position of the piston ring gap with respect to the cylinder based on the received temperature data.

The signal analysing unit may further be configured to determine the angular position of the piston ring gap by means of fitting a fitting curve to the temperature data and by means of determining an angular position of the maximum of the fitting curve.

The signal analysing unit may only be configured for fitting a fitting curve to temperature data of one set of sensors with one, two, three or four temperature sensors, preferably three temperature sensors.

The signal analysing unit may be adapted to process the temperature data provided by the temperature sensors. Each sensor may measure a time dependent curve, preferably during one or more piston strokes.

The signal analysing unit may be adapted to determine the mean value during a measuring time interval for further processing, e.g. for fitting. The time interval may have a duration from 0.5 seconds to 20 seconds, preferably 1 second to 10 seconds.

The signal analysing unit is further adapted to determine the angular position of the piston ring gap, in particular of the most upper piston ring, with respect to the cylinder by determining the circumferential position of the maximum of the fitting curve.

With only a few temperature sensors the position of the angular position of the piston ring gap can be determined. Fitting to data of a set of sensors comprising only one to four sensors might have a slightly lower accuracy than fitting to data of more sensors but it turned out that the accuracy is high enough, in particular, when the measuring takes place over a longer time.

A gap position measuring device can easily be retrofitted in an existing combustion machine, since there is only a minor expense.

Also, for engines, which already comprise more than four temperature sensors in a cylinder, a gap position measuring device according to the invention can be set up with a respective signal analysing unit using only a one to four temperature sensors, for example when some of the temperature sensors drop out due to be broken or to be dirty.

The sensors may be fixed in positions with a high temperature epoxy or other means to prevent micro-movement due to engine vibration.

The sensors may be mounted spring loaded and may be fixed with bayonet plugs. The sensors may be PT1000 temperature sensors or thermocouples.

Preferably the fitting curve has a number of free parameters which corresponds to the number of temperature sensors which provide data.

Preferably, the fitting curve corresponds to an expected temperature profile along the circumference of the cylinder during the measurement interval, having one significant maximum.

Also fitting curves with more free parameters can be used for fitting, when a so called particle filter, or sequential Monte Carlo method, is used, which finds approximate solutions for filtering problems for nonlinear state-space systems.

The fitting curve of the gap position measuring device may have the form $\overline{f} \left(α\right) = - \left|a\right| ⋅ sin \left(\frac{α}{2}+φ\right) + b .$

Alternative fitting functions may be used as fitting curves which are continuous and have a single maximum between 0° and 360°,

The maximum of the fitting curve may provide the angular position of the piston ring gap, since it can be assumed that the piston ring gap is at the position of the temperature maximum.

Under normal circumstances the width of piston ring gap will not change.

If nevertheless there is so much wear that the width of the gap would enlarge and the piston ring would be leaking, this method might provide less accurate solutions. However, independent from the width of the ring gap, the maximum of the temperature distribution will be always at the same position. There might be only an influence on the amplitude which is also dependent from other parameters like actual load point and fuel type of the engine.

A leak of the piston ring would be caught by other monitoring solutions, as leakage of lots of exhaust gas into the piston underside typically is detected by special sensors. In that case, the crew would be aware that the gap monitoring might be affected.

The signal analysing unit may be adapted to receive temperature data over time and to determine the velocity of the rotational movement of the piston ring gap on basis of the angular positions of the maxima of the fitting curve over time.

In this context "over time" means that data of the temperature sensors are provided from a plurality, preferably successive, measurement intervals. Measurements may be taken for example during each expansion stroke and the circumferential positions of the temperature maximum may be regarded over a number of expansion strokes, wherein each measurement time corresponds to the time of an expansion stroke. The velocity of the rotational movement of the piston ring gap corresponds to the piston ring rotation speed.

The signal analysing unit may be adapted to compare velocity of the rotational movement of the piston ring gap with a predetermined velocity limit. In case an excessive value piston ring rotation speed is detected, the signal analysing unit may be adapted to induce a signal and/or a service action. During a service action, it might be necessary to change the piston ring.

The signal analysing unit may be adapted to receive temperature data over time and may be adapted to determine a liner heatmap on the basis of the angular positions of the maxima of the fitting curve over time.

The liner heatmap in particular corresponds to the probability of the gap position depending on a circumferential angle section or an angular region.

The liner heatmap may be represented by a histogram, wherein the frequency of occurrence of a maximum of the fitting curve per angular section around the circumference is counted, i.e. the number of a maximum over time per angular section.

The histogram may be normalized, for example by dividing through the number of measurement events.

A circumferential section with a relatively high number of maximum occurrences compared to other circumferential sections therefore has a higher probability that the piston ring gap is positioned in this section.

Typically, this higher probability after some time corresponds to a higher wear of the liner in this circumferential region, which can be affirmed when the liner is for example optically examined.

The liner heatmap may comprise more than one maximum, corresponding to more than one region with a higher wear. Various reasons may cause a higher wear. For example, manufacturing issues of the liner may result in the inner shape of the liner being more oval than round in some areas. Additionally or alternatively, lubrication may be different in different regions of the liner.

The signal analysing unit may be adapted to induce a signal and/or a service action in dependence of the liner heat map.

In particular, the signal analysing unit may be adapted to compare the liner heatmap with a target heatmap and/or with a target range and to induce a signal and/or a service action, if the difference between the liner heat map and the target heatmap is beyond a predetermined acceptance value.

The target heat map may correspond to an ideal heat map, for example a uniform distribution of the probability or a histogram with the same number of maximum occurrences for all angular sections on the circumference.

The difference between the liner heatmap with a target heat map may be determined by the maximum value of the liner heatmap, for example as compared to the mean value of the target heat map. The maximum value of the liner heatmap should not exceed a certain limit, for example the predetermined acceptance value, to prevent extensive wear.

If the maximum value approaches the limit, a signal and/or a service action could be triggered.

The predetermined acceptance value may be chosen such that the limit is not reached to guarantee a low wear of the liner.

A service action can be triggered on the basis of the information about the position of the temperature maximum.

For example, the lubrication can be modified by increasing the quantity over the whole cylinder or locally at individual injectors.

The injected quantity of fuel can be reduced in this cylinder, in particular relative to the other cylinders, up to the complete shutdown of the cylinder.

An instruction to carry out an inspection may be induced.

The signal analysing unit may be adapted to predict when the piston ring or cylinder jacket must be replaced on basis of the change of the liner heatmap over time.

The gap position measuring device may comprise a monitor adapted to display the position of the piston ring gap, a rotation velocity and/or the liner heat map.

The monitor may also be adapted to display a signal or a warning to trigger a service action when necessary.

The gap position measuring device may comprise at least one further set of sensors with at least one temperature sensor, arranged in the liner wall of the cylinder and circumferentially spaced apart in a respective further axial plane.

Preferably the further set of sensors also comprises one to four temperature sensors, more preferably three temperatures sensors, in the respective further axial plane.

The first axial plane and the further axial plane may be distanced corresponding to the axial distance of a first piston ring and a further piston ring, and the signal analysing unit may be adapted to determine the angular position of gaps of a first and at least a further piston ring.

The signal analysing unit may be adapted to evaluate the temperature data of the sensor sets individually, such that the risk of an excessive wear of a ring or of the liner can be associated with a respective piston ring.

The signal analysing unit may be adapted for receiving temperature data of the temperature sensors continuously or on a regular basis, for example for each stroke, once after a certain number of strokes, once per a certain time interval, such as once per hour.

The signal analysing unit may be adapted for processing the received data continuously or on a regular basis, preferably on the same time basis as for receiving the data.

The signal analysing unit may be adapted to use a particle filter (sequential Monte Carlo methods).

When using a particle filter or sequential Monte Carlo method a mathematical model may describe the profile of the temperature distribution due to for example a first piston ring and a second piston ring. The profile may correspond to a fitting curve as described above.

For example, when using only one set of sensors, the fitting curve may correspond to a fitting function having more parameter than data provided by the measuring points. Hence, the equations may be underdetermined.

According to the particle filter method random values are chosen for the free parameter and by Monte Carlo simulation it may be determined which combination of values fits best to the measured values.

In a first step, there may be several different combinations that fit.

After the next measurement, when the rings may have moved, a next computational iteration is performed. For this iteration the solutions from the first simulation, which were closest to the measured values, are used as a starting point, and the random parameters for these solutions are varied only slightly in a random way.

From these solutions only the best solutions may be taken for the next step.

After some iterations, typically only a few configurations may be left, which may look very similar.

The mean value from all the remaining configurations may be taken to determine the positions of the piston ring gaps.

It turned out, that this solution is then very close to the actual position of the piston ring gaps.

By using a Monte Carlo Simulation, only two sensors are necessary, preferably arranged on the top dead center position of top ring.

In case there are three sensors at the top dead center positions of each ring, fitting of three parameter curves as shown above is possible without Monte Carlo simulation.

The object of the invention is also achieved by an internal combustion engine comprising at least one cylinder, a reciprocating piston having at least one piston ring and comprising a gap position measuring device as described above.

The object of the invention is also achieved by a method for operating an internal combustion engine, preferably as described above, having a cylinder and a reciprocating piston with at least one piston ring, comprising the following steps.

Temperature data of one, two, three or four measure points, preferably three, on or in a liner wall of the cylinder which are circumferentially spaced apart in an axial plane are received, preferably provided by respective temperature sensors.

A fitting curve is fitted to the temperature data and the angular position of a piston ring gap with respect to the cylinder is determined by determining the angular position of the maximum of the fitting curve.

The method may comprise the further step of receiving temperature data over a time and of determining a liner heatmap on basis of the angular positions of the maxima of the fitting curve over time.

The liner heatmap in particularly corresponds to the probability of the gap position depending on a circumferential angular section. The liner heatmap may be represented by a histogram counting the frequency of occurrence of a maximum of the fitting curve per angular section around the circumference.

The method may comprise the further step of inducing a signal and/or a service action in dependence of the liner heatmap.

The object of the invention is also achieved by a computer program comprising a program code for carrying out the steps of the method as described above when the program is executed on a computer of an internal combustion engine as described above.

The object of the invention is also achieved by computer program product loadable directly into an internal memory of a digital computer comprising software code portions executing the method steps as described above when the program is running on the digital computer of an internal combustion engine as described above.

Further advantageous aspects of the invention are explained in the following by means of exemplary embodiments and the figures. In the drawing, in a schematic manner:
- Figure 1:: shows a schematic illustration of an internal combustion engine having a cylinder with a piston having piston rings in a side view;
- Figure 2:: shows a schematic illustration of a gap position measuring device in a cross sectional view of a first axial plane;
- Figure 3:: shows a schematic illustration of temperature data and fitting curve;
- Figure 4:: shows a first example of a liner heatmap;
- Figure 5:: shows a second example of a liner heatmap.

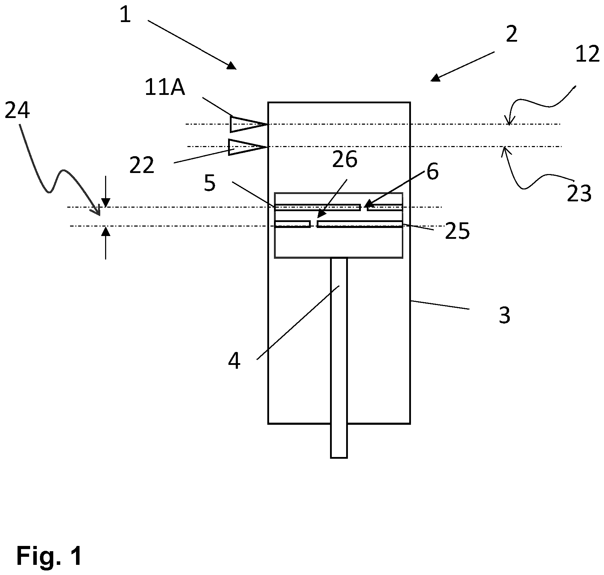

Figure 1 shows a schematic illustration of internal combustion engine 1 having a cylinder 2 with a piston 4 having piston rings 5.

A piston 4 reciprocates within the cylinder. In this figure two piston rings 5, 25 are shown. The piston 4 may have only one piston ring 5 or may have two or more piston rings.

A first set of sensors with three temperature sensors 11A, 11B, 11C is arranged in the liner wall 3 of the cylinder 2 in a first axial plane 12.

A further set of sensors with temperature sensors 22 may be arranged in the liner wall 3 of the cylinder 2, which temperature sensors 22 may also be circumferentially spaced apart in a respective further axial plane 23. The further axial plane 23 preferably is distanced from the first axial plane 12 corresponding to the axial distances 24 of a first piston ring 5 and a further piston ring 25.

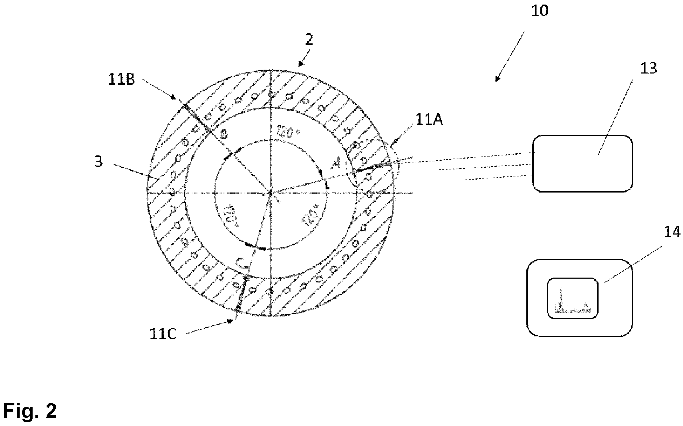

In a longitudinally scavenged cylinder 2 temperature sensors 11A, 11B, 11C (see figure 2) and 22 may be arranged above the scavenging ports (not shown in the figure).

For example, the sensors 11A, 11B, 11C may be placed at the vertical center of the first piston ring 5, when the piston 4 is in top dead center (TDC) position. In this position, the piston 4 is as close as possible to the position where the most "blow-by" of exhaust gas through the ring gap 6 and thus the highest temperatures changes occur. Alternatively, the sensors 11A, 11B, 11C may be arranged vertically above that TDC position of the first ring 4, i.e. closer to the combustion chamber. This position also provides for reasonable results within this method. Figure 2 shows a schematic illustration of a gap position measuring device 10 in a cross-sectional view of the first axial plane 12 (see figure 1). The gap position measuring device 10 has three temperature sensors 11A, 11B 11C, arranged in the liner wall 3 of the cylinder 2 and circumferentially spaced from each other in the first axial plane 12.

The three temperature sensors 11A, 11B, 11C are arranged at equally distanced angular positions A, B and C.

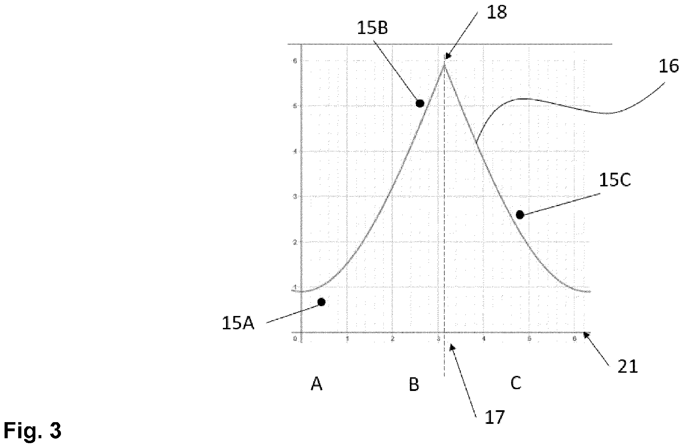

The gap positioning device 10 comprises a signal analysing unit 13 which is adapted for receiving data 15A, 15B, 15C (see figure 3) of the temperature sensors 11A, 11B, 11C.

The signal analysing unit 13 may be adapted to also receive data of temperature sensors 22 of further sensor sets, arranged in one or more further axial planes 23 (see figure 1).

The signal analysing unit 13 may be adapted to provide data for displaying the angular position of the piston ring gap on a monitor 14. The monitor 14 may also show a warning signal or induce a service action.

Figure 3 shows a schematic illustration of temperature data 15A, 15B, 15C and a fitting curve 16.

Typically, the temperature data 15A, 15B, 15C are measured when the piston ring 6 passes the axial plane 12 during a piston stroke.

In this example the fitting curve 16 has the form $\overline{f} \left(α\right) = - \left|a\right| ⋅ sin \left(\frac{α}{2}+φ\right) + b .$

The signal analysing unit 13 is adapted to fit the fitting curve 16 to the data 15A, 15B, 15C, measured at the angular positions A, B and C by the senores 11A, 11B and 11C (see figure 2).

The circumferential position of the maximum 18 of the fitting curve 16 is determined which corresponds and to the angular position 17 of the piston ring gap 6 with respect to the cylinder circumference.

The signal analysing unit 13 may be adapted to determine the angular position of the piston ring gaps 6, 26 of a first piston ring 5 and at least one further piston ring 25 (see figure 1).

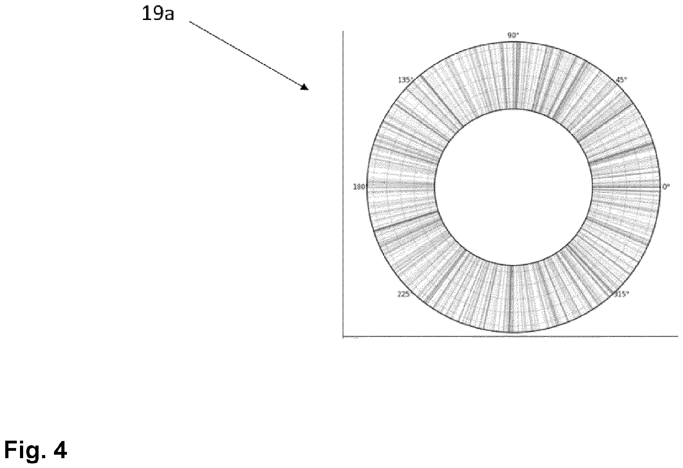

Figure 4 shows a first example of a liner heatmap 19a.The circumferential position of the maximum 18 of the fitting curve 16 (see figure 3) is represented by a line at the respective angle in a circle diagram. Regions with more lines have a higher risk of heat input to the liner and a higher risk of wear.

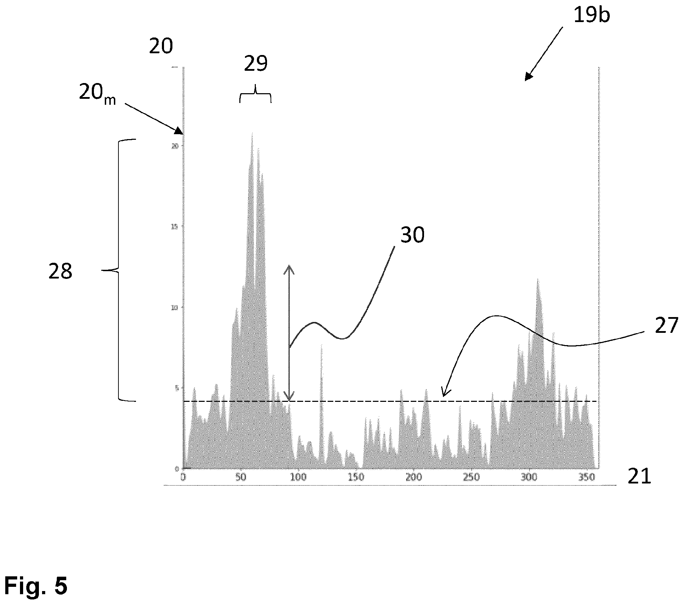

Figure 5 shows a second example of a liner heatmap 19b.

The occurrences 20 of a maximum 18 of the fitting curve 16 (see figure 3) which corresponds to the probability of the piston ring gap position in a certain angular section 21 are denoted.

The y-axis corresponds to the number of occurrences 20 and the x-axis to the angular section 21.

In an angular region 29 the difference 28 between number of occurrences 20ₘ and a target heatmap 27 might be higher than a predetermined acceptance value 30. In this angular region, liner wear is more likely. The signal analysing unit 13 (see figure 2) thus may provide a warning signal.

### Note

Any embodiments described with respect to the devices shall similarly pertain to the method. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

### Reference Numbers

internal combustion engine (1)
one cylinder (2)
liner wall (3)
piston (4)
piston ring (5)
piston ring gap 6
gap position measuring device (10)
temperature sensors (11A, 11B, 11C)
first axial plane (12)
signal analysing unit (13)
monitor (14)
data (15A, 15B, 15C)
fitting curve (16)
angular position (17)
maximum (18)
liner heatmap (19a; 19b)
number of occurences (20)
circumferential angle (21)
temperature sensors (22)
second axial plane (23)
axial distances (24)
two piston rings (5, 25)
gaps (6, 26)
target heatmap 27
differences 28
angular region 29
predetermined acceptance value 30

## Claims

1. A gap position measuring device (10) for an internal combustion engine (1) comprising at least one cylinder (2) with a liner wall (3), a reciprocating piston (4) having at least one first piston ring (5) with a piston ring gap (6), wherein the gap position measuring device (10) comprises
- a first set of sensors with at least one temperature sensor (11A, 11B, 11C), preferably three temperature sensors, adapted to be arranged on or in the liner wall (3), preferably circumferentially spaced apart in a first axial plane (12), and
- a signal analysing unit (13) configured to receive temperature data (15A, 15B, 15C) from the first set of sensors (11A, 11B, 11C) and further adapted to determine an angular position (17) of the piston ring gap (6) with respect to the cylinder based on the received temperature data.

2. The gap position measuring device according to claim 1,
wherein the first set of sensors comprises less than five temperature sensors.

3. The gap position measuring device according to claim 1 or 2, wherein the signal analysing unit (13) is configured to determine the angular position (17) of the piston ring gap (6) by means of fitting a fitting curve (16) to the temperature data (15A, 15B, 15C) and by means of determining an angular position of the maximum (18) of the fitting curve (16),
and advantageously wherein the fitting curve (16) has a form of $\overline{f} \left(α\right) = - \left|a\right| ⋅ sin \left(\frac{α}{2}+φ\right) + b$

4. The gap position measuring device according to claim 3 , wherein the signal analysing unit (13) is configured to receive the temperature data (15A, 15B, 15C) over time and to determine a velocity of a rotational movement of the piston ring gap (6) based on the angular positions (17) of the maxima (18) of the fitting curve (16) over time.

5. The gap position measuring device according to any one of the claims 3 to 4, wherein the signal analysing unit (13) is configured to receive the temperature data (15A, 15B, 15C) over time and to determine a liner heatmap (19a; 19b) of the angular positions (17) of the piston ring gap (6).

6. The gap position measuring device according to claim 5,
wherein the signal analysing unit (13) is configured to issue a signal and/or to trigger a service action based on the liner heat map,
and in particular wherein the signal analysing unit (13) is configured to compare the liner heatmap (19a; 19b) with a target heatmap (22) and to induce the signal and/or to trigger the service action if a difference (28) between the liner heat map (19a; 19b) and the target heatmap (27) is larger than a predetermined threshold.

7. The gap position measuring device according to any one of the preceding claims, further comprising a monitor (14) configured to display the angular position (17) of the piston ring gap (6), the velocity of the rotational movement of the piston ring gap (6) and/or the liner heat map (19a; 19b).

8. The gap position measuring device according to any one of the preceding claims, wherein the gap position measuring device (10) comprises at least one further set of sensors with at least one temperature sensor (22), preferably three temperature sensors (22), adapted to be arranged in the liner wall (3) and circumferentially spaced apart in a further axial plane (23), wherein the first axial plane (12) and the further axial plane (23) are preferably arranged at an axial distance corresponding to an axial distance (24) between the first piston ring (5) and a further piston ring (25), and wherein the signal analysing unit (13) is configured to determine the angular positions of piston ring gaps (6, 26) of the first and of the further piston ring based on the temperature data (15A, 15B, 15C) from the first set of sensors and based on temperature data from the further set of sensors.

9. The gap position measuring device according to any one of the preceding claims, wherein the signal analysing unit (13) is configured to receive the temperature data (15A, 15B, 15C) continuously, at predetermined regular or irregular time intervals, or on demand.

10. The gap position measuring device according to any one of preceding claims, wherein the signal analysing unit (13) is configured to use a sequential Monte Carlo method.

11. An internal combustion engine (1) comprising at least one cylinder (2) with a liner wall (3), a reciprocating piston (4) having at least one piston ring (5, 25), and a gap position measuring device (10) according to any one of the preceding claims.

12. A method for operating an internal combustion engine (1), preferably according to claim 11, the method comprising steps of
- receiving temperature data (15A, 15B, 15C) from a first set of at least one measurement point (A, B, C), preferably less than five measurement points, preferably three measurement points, located on or in a liner wall (3) of a cylinder (2), wherein the measurement points are preferably circumferentially spaced apart in a first axial plane (12, 23), and
- determining an angular position (18) of a piston ring gap (6) with respect to the cylinder (3) based on the temperature data.

13. The method according to claim 12, comprising, for determining the angular position (18) of the piston ring gap (6), at least one further step from the group consisting of
- fitting a fitting curve (16) to the temperature data (15A, 15B, 15C) and determining an angular position (17) of the maximum (18) of the fitting curve (16), and
- using a sequential Monte Carlo method.

14. The method according to any one of the claims 12 to 13 comprising a further step of
- receiving the temperature data (15A, 15B, 15C) over time and determining a liner heatmap (19a; 19b) of the angular positions (17) of the piston ring gap (6),
- and preferably issuing a signal and/or triggering a service action based on the liner heatmap (19a; 19b).

15. A computer program comprising instructions which, when the program is executed by a computer of an internal combustion engine (1) according to claim 11, cause the computer to carry out the method of any one of the claims 12 to 15.
